(19) Europäisches Patentamt
European Patent Office
Office européen des brevets

(11) **EP 2 826 834 B1**

(12) **EUROPEAN PATENT SPECIFICATION**

(45) Date of publication and mention
of the grant of the patent:
**11.07.2018 Bulletin 2018/28**

(51) Int Cl.:
*C08G 63/12* (2006.01)      *C08G 63/553* (2006.01)
*C09J 167/06* (2006.01)      *C09J 167/02* (2006.01)

(21) Application number: **13761090.3**

(86) International application number:
**PCT/JP2013/056321**

(22) Date of filing: **07.03.2013**

(87) International publication number:
**WO 2013/137108 (19.09.2013 Gazette 2013/38)**

(54) **ADHESIVE COMPOSITION AND ADHESIVE SHEET**

HAFTZUSAMMENSETZUNG UND HAFTFOLIE

COMPOSITION ADHÉSIVE ET FEUILLE ADHÉSIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.03.2012   JP 2012060679
05.03.2013   JP 2013043208**

(43) Date of publication of application:
**21.01.2015   Bulletin 2015/04**

(73) Proprietor: **Nitto Denko Corporation
Ibaraki-shi, Osaka 567-8680 (JP)**

(72) Inventors:
• **YOSHIE,Satomi
Ibaraki-shi
Osaka 567-8680 (JP)**
• **ISHIGURO,Shigeki
Ibaraki-shi
Osaka 567-8680 (JP)**
• **SENDA,Hiroki
Ibaraki-shi
Osaka 567-8680 (JP)**

(74) Representative: **Grünecker Patent- und
Rechtsanwälte
PartG mbB
Leopoldstraße 4
80802 München (DE)**

(56) References cited:
EP-A1- 2 311 896      WO-A1-2011/081163
JP-A- H0 770 536      JP-A- H03 167 284
JP-A- H03 167 284      JP-A- H04 328 186
JP-A- H04 328 186      JP-A- 2002 194 314
JP-A- 2005 290 211      JP-A- 2007 308 626
JP-A- 2008 013 593      JP-A- 2009 280 688

**Description**

TECHNICAL FIELD

The present invention relates to a polyester-based pressure-sensitive adhesive composition and a pressure-sensitive adhesive sheet using the composition.

BACKGROUND ART

In recent years, those having good wettability to a display surface as an adherend, and having adhesive strength proper for light peeling at the time of peeling off are required as a pressure-sensitive adhesive sheet for surface protection to be used for surface protection of display surfaces of electronic mobile appliances including smart phones as well as personal computers, televisions, and the like.

In such requests, silicone-based pressure-sensitive adhesives having high wettability have been used as pressure-sensitive adhesives for surface protection; however, they have a problem of high cost.

Further, awareness of environments has been considered to be important year by year, and extrication from dependence on petroleum is supposed to be an urgent issue, and it is highly expected to transfer to plant-derived materials with the use of petroleum resources as little as possible. In such a situation, a polyester-based pressure-sensitive adhesive using a dimer acid and a dimer diol derived from plants has been discussed (Patent Document 1), but also has a problem of high cost.

Therefore , in order to solve the above-mentioned problems, pressure-sensitive adhesive sheets for surface protection by using low cost acryl-based pressure-sensitive adhesives have been proposed (reference to Patent Documents 2 and 3).

However, in the case of using the acryl-based pressure-sensitive adhesives, a plasticizer is used and there occurs a problem of bleeding out of a plasticizer component and thus causing staining of an adherend after the acryl-based pressure-sensitive adhesives are bonded to a display surface as an adherend.

Patent Document 4 discloses a polyester comprising at least a lactic acid unit, a dibasic acid unit and a glycol unit, wherein the dibasic acid unit contains dimer acid, and wherein the polyester has a glass transition temperature of -70 to -20°C, a weight average molecular weight of 20,000 to 300,000 and a hydroxyl value of 1 to 100 mgKOH/g.

A polyester-based tacky agent is described in Patent Document 5 which contains an amorphous polyester resin comprising a dicarboxylic acid component consisting of 90-50 mol% aromatic dicarboxylic acid and 10-50 mol% dimer acid and a glycol component composed of ≥ 30 mol% glycol containing an alkyl group on the side chain.

Patent Document 6 discloses an adhesive composition comprising an aliphatic polyester having a hydrogenation 1,2-polybutadiene structure and a crosslinking agent.

PRIOR ART DOCUMENT

PATENT DOCUMENTS

Patent Document 1: JP-A-2008-13593
Patent Document 2: JP-A-2007-327012
Patent Document 3: JP-A-2010-248489
Patent Document 4: EP-A-2311896
Patent Document 5: H04 328186
Patent Document 6: H03 167284

SUMMARY OF THE INVENTION

PROBLEMS TO BE SOLVED BY THE INVENTION

Accordingly, the present invention aims to provide a polyester-based pressure-sensitive adhesive composition which can be produced even from plant-derived raw materials with no need of using a costly silicone-based pressure-sensitive adhesive or the like and which is usable for producing a pressure-sensitive adhesive sheet excellent in wettability to an adherend, light peelability, removability, anti-staining property (little adhesive residues), and workability, and to provide a pressure-sensitive adhesive sheet using the composition for uses including surface protection.

MEANS FOR SOLVING THE PROBLEMS

The inventors of the present invention have made various investigations in order to solve the above-mentioned problems, and consequently found a polyester-based pressure-sensitive adhesive composition and a pressure-sensitive adhesive sheet as described below, and this finding has led to completion of the present invention.

That is, the polyester-based pressure-sensitive adhesive composition of the present invention is a polyester-based pressure-sensitive adhesive composition comprising a polyester obtained by condensation polymerization of at least a dicarboxylic acid having a side chain and an aliphatic diol having 3 to 10 carbon atoms, a polyether glycol and a crosslinking agent, wherein

mole ratio of the dicarboxylic acid and the diol is 1 : (1.08 to 2.10), and
the polyester has a weight average molecular weight of 5000 to 60000 as measured by gel permeation chromatography (GPC) using standard polystyrene as calibration curve and the following measurement conditions:

Apparatus name: HLC-8220GPC
Test piece concentration: 0.1% by weight (THF solution)
Test piece injection amount: 20 $\mu$l
Eluent: THF
Flow rate: 0.300 ml/min
Measurement (column) temperature: 40°C
Column: Test piece column; TSKguardcolumn SuperHZ-L (1 column)+TSKgel SuperHZM-M (2 columns), reference column; TSKgel SuperH-RC (1 column) Detector: Differential refractometer (RI).

The pressure-sensitive adhesive sheet of the present invention is a pressure-sensitive adhesive sheet comprising a support and a pressure-sensitive adhesive layer obtained by crosslinking the polyester-based pressure-sensitive adhesive composition and formed on at least one surface of the support, wherein the pressure-sensitive adhesive layer has a gel fraction of 40 to 98% by weight when cut in a size of 5 cm $\times$ 5 cm having a thickness of 30 $\mu$m, wrapped with a Teflon sheet, weighed and then left at 23°C for 7 days in toluene dried at 120°C for 2 hours and then weighed again, the gel fraction being calculated according to the following equation:

$$\text{Gel fraction (\% by weight)} = (\text{weight after drying} - \text{weight of Teflon sheet})/(\text{weight}$$

$$\text{before drying} - \text{weight of Teflon sheet}) \times 100.$$

The pressure-sensitive adhesive sheet of the present invention is preferably used for surface protection.

EFFECT OF THE INVENTION

The present invention can provide a polyester-based pressure-sensitive adhesive composition which can be produced even from plant-derived raw materials with no need of using a costly silicone-based pressure-sensitive adhesive or the like and which is usable for producing a pressure-sensitive adhesive sheet (particularly for surface protection) excellent in wettability to an adherend, light peelability, removability, anti-staining property (little adhesive residues produced), and workability, and a pressure-sensitive adhesive sheet using the composition, and thus the present invention is useful.

MODE FOR CARRYING OUT THE INVENTION

Hereinafter, embodiments of the present invention will be described in detail.

<Polyester>

The polyester to be used for the polyester-based pressure-sensitive adhesive composition of the present invention is a polyester obtained by condensation polymerization of at least a dicarboxylic acid having a side chain and an aliphatic diol having 3 to 10 carbon atoms. A polyester synthesis method is not particularly limited, and a publicly-known polymerization method may be used.

It is a preferable embodiment is that the polyester is produced from plant-derived raw materials. The reason for this is that a plant-derived raw material is biodegradable, is said to be so-called carbon neutral, is friendly to global environments, and is suitable for obtaining an environment-friendly pressure-sensitive adhesive.

The dicarboxylic acid is one which has a side chain and two carboxyl groups as a functional group, and is preferably one having an alkyl group as the side chain. The dicarboxylic acid has a side chain, and therefore the flexibility is increased. Further the side chain is an alkyl group, which makes hydrolysis of the polyester difficult to be caused, and therefore it is a preferable embodiment.

Specific examples of the dicarboxylic acid include plant-derived dicarboxylic acids such as dimer acids derived from a castor oil-derived sebacic acid, oleic acid and erucic acid. Examples of other dicarboxylic acids include aliphatic and alicyclic dicarboxylic acids such as adipic acid, azelaic acid, 1,4-cyclohexanedicarboxylic acid, 4-methyl-1,2-cyclohexanedicarboxylic acid, dodecenyl succinic anhydride, fumaric acid, succinic acid, dodecanedioic acid, hexahydrophthalic anhydride, tetrahydrophthalic anhydride, maleic acid, maleic anhydride, itaconic acid, and citraconic acid; as well as terephthalic acid, isophthalic acid, orthophthalic acid, 1,5-naphthalenedicarboxylic acid, 2,6-naphthalenedicarboxylic acid, 4,4'-diphenyldicarboxylic acid, 2,2'-diphenyldicarboxylic acid, and 4,4'-diphenyl ether dicarboxylic acid. Among them, dimer acids and the like are preferable in terms of plant-derived acids and friendliness to global environments. These acids may be used alone or in combination of two or more of them.

As the diol, aliphatic diols having two hydroxyl groups at both terminals of each molecule and 3 to 10 carbon atoms, and preferably 4 to 8 carbon atoms, are used. If the carbon number is less than 3, the diol component tends to be evaporated easily because of lowering its boiling point at the time of production (polymerization) of the polyester, and consequently an increase in viscosity is generated and the polymerization of the polyester cannot be controlled. On the other hand, if the carbon number exceeds 10, the diol tends to be crystallized easily, becomes inferior in handleability (workability) and may become disadvantageous in terms of cost, and therefore it is not preferable.

Specific examples of the diol include aliphatic glycols such as 1,2-propylene glycol, 1,3-propanediol, 2-methyl-1,3-propanediol, 1,2-butanediol, 1,3-butanediol, 1,4-butanediol, 1,5-pentanediol, 1,6-hexanediol, 3-methyl-1,5-pentanediol, neopentyl glycol, diethylene glycol, dipropylene glycol, 2,2,4-trimethyl-1,5-pentanediol, 2-ethyl-2-butylpropanediol, 1,9-nonanediol, 2-methyloctanediol, 1,10-decanediol, 1,4-cyclohexanedimethanol, and 1,2-cyclohexanedimethanol. Among them, particularly plant-derived diols are preferable in terms of friendliness to global environments. These diols may be used alone or in combination of two or more of them.

The mole ratio of the dicarboxylic acid and the diol is preferably 1 : (1.08 to 2.10), more preferably 1 : (1.09 to 2.05), and furthermore preferably 1 : (1.10 to 2.00). If the mole ratio is smaller than 1 : 1.08, the molecular weight of the polyester to be obtained becomes high, and a hydroxyl group to be served as a functional group is lessened to make it difficult to accelerate crosslinking reaction even if a crosslinking agent (e.g., polyfunctional isocyanate) is used, so that a pressure-sensitive adhesive layer with a desired gel fraction is not obtained. On the other hand, if the mole ratio exceeds 1 : 2.10, only a polyester with a molecular weight smaller than the desired molecular weight tends to be obtained, and even if a crosslinking agent is used, gelation cannot be promoted and it results in that a pressure-sensitive adhesive layer with a desired gel fraction is not obtained, and therefore it is not preferable. The mole number of the dicarboxylic acid and that of the diol are similar to each other, and when the mole ratio becomes close to 1 : 1, the molecular weight of the polyester to be obtained is increased, and thus the adhesive strength (peel strength) is increased and light peeling cannot be achieved. Accordingly, these are not preferable in the pressure-sensitive adhesive sheet for surface protection.

The polyester to be used for the polyester-based pressure-sensitive adhesive composition of the present invention is characterized by having a weight average molecular weight (Mw) of 5000 to 60000, preferably 5500 to 55000, and more preferably 6000 to 50000. The case where the weight average molecular weight is less than 5000 may become a cause of a decrease in adhesive strength of a pressure-sensitive adhesive using the polyester, and may not be possible to fix a pressure-sensitive adhesive sheet (pressure-sensitive adhesive layer) itself to an adherend. On the other hand, the case where the weight average molecular weight exceeds 60000 may become a cause of a decrease in cohesive strength or a decrease in holding strength, and therefore it is not preferable.

Other components other than the dicarboxylic acid and the aliphatic diol can be polymerized or added after polymerization to an extent that the properties of the polyester to be used for the pressure-sensitive adhesive sheet of the present invention are not adversely affected.

In the present invention, the polymerization (condensation polymerization) reaction of the dicarboxylic acid and the aliphatic diol may be carried out using a solvent or using no solvent under reduced pressure, and a conventionally known method may be used.

Examples of a method of removing water produced by the polymerization (condensation) reaction include a method in which azeotropic dehydration is conducted using toluene or xylene, a method in which an inert gas is bubbled into a reaction system thereby ejecting produced water and monoalcohol out of the reaction system, together with the inert gas, and a method of distilling under reduced pressure.

It is possible to use, as a polymerization catalyst used in the polymerization (condensation) reaction, those used as a polymerization catalyst used in a conventional polyester, and examples of usable polymerization catalyst include, but are not limited to, various metal compounds such as titanium-based, tin-based, antimony-based, zinc-based and germanium-based compounds; and strong acid compounds such as p-toluenesulfonic acid and sulfuric acid.

<Polyester-based pressure sensitive adhesive composition>

The polyester-based pressure-sensitive adhesive composition of the present invention contains a crosslinking agent. A pressure-sensitive adhesive layer can be formed by carrying out the crosslinking reaction of the pressure-sensitive adhesive composition using a crosslinking agent. The crosslinking agent is not particularly limited and conventionally and publicly-known crosslinking agents can be used. Examples of the crosslinking agent that can be used include polyvalent isocyanurates, polyfunctional isocyanates, polyfunctional melamine compounds, polyfunctional epoxy compounds, polyfunctional oxazoline compounds, polyfunctional aziridine compounds, and metal chelate compounds. Particularly, in terms of transparency of the pressure-sensitive adhesive layer to be obtained and formation of a pressure-sensitive adhesive sheet (pressure-sensitive adhesive layer) with high gel fraction, the use of a polyvalent isocyanurate or a polyfunctional isocyanate compound is a preferable embodiment. These compounds may be used alone or in combination of two or more of them.

Examples of the polyvalent isocyanurate include a polyisocyanurate compound of hexamethylene diisocyanate. Use of the polyvalent isocyanurate is effective since it is possible to achieve an object of obtaining transparency and high gel fraction of the obtained pressure-sensitive adhesive layer. It is also possible to use commercially available products of the polyvalent isocyanurate and specific examples thereof include "DURANATE TPA-100" (trade name, manufactured by Asahi Kasei Chemicals Corporation), and "CORONATE HK", "CORONATE HX" and "CORONATE 2096" (trade names, manufactured by Nippon Polyurethane Industry Co., Ltd.). These can be used alone, or in combination of two or more kinds thereof.

As the polyfunctional isocyanate compound, a compound having at least two isocyanate groups in the molecule is preferably used, and a compound having three or more isocyanate groups in the molecule is more preferably used without any particular limitation. Specific examples may include aliphatic polyisocyanates, alicyclic polyisocyanates, and aromatic polyisocyanates. These compounds may be used alone or in combination of two or more of them.

Examples of the aliphatic polyisocyanates include tetramethylene diisocyanates such as 1,2-ethylene diisocyanate, 1,2-tetramethylene diisocyanate, 1,3-tetramethylene diisocyanate and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate and 2,5-hexamethylene diisocyanate; and 2-methyl-1,5-pentane diisocyanate, 3-methyl-1,5-pentane diisocyanate and lysin diisocyanate.

Examples of the alicyclic polyisocyanates include isophorone diisocyanate; cyclohexyl diisocyanates such as 1,2-cyclohexyl diisocyanate, 1,3-cyclohexyl diisocyanate and 1,4-cyclohexyl diisocyanate; cyclopentyl diisocyanates such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate and 4,4'-dicyclohexylmethane diisocyanate.

Examples of the aromatic polyisocyanates include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenyletherdiisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate and xylylene-1,3-diisocyanate.

It is possible to use, as the polyfunctional isocyanate compound, for example, dimers and trimers of araliphatic polyisocyanates other than the aliphatic polyisocyanates, alicyclic polyisocyanates, aromatic polyisocyanates and araliphatic polyisocyanates. Specific examples thereof include a dimmer and a trimer of diphenylmethane diisocyanate; a reaction product of trimethylolpropane and tolylene diisocyanate; a reaction product of trimethylolpropane and hexamethylene diisocyanate; and polymers such as polymethylene polyphenylisocyanate, polyether polyisocyanate and polyester polyisocyanate.

It is also possible to use commercially available products as the polyfunctional isocyanate compound, and specific examples thereof include "CORONATE L" (trade name, manufactured by Nippon Polyurethane Industry Co., Ltd.) as a trimer adduct of trimethylolpropane and tolylene diisocyanate, and "CORONATE HL" (trade name, manufactured by Nippon Polyurethane Industry Co., Ltd.) as a trimer adduct of trimethylolpropane and hexamethylene diisocyanate.

Examples of the polyfunctional melamine compound include methylated methylolmelamine and butylated hexamethylolmelamine, and examples of the polyfunctional epoxy compound include diglycidylaniline and glycerin diglycidyl ether.

The kind and blending amount of the crosslinking agent are not particularly limited, and for example, in the case of a pressure-sensitive adhesive sheet for general use, the crosslinking agent may be used such that the pressure-sensitive adhesive layer to be formed has a gel fraction of 40 to 98% by weight, and more preferably 40 to 85% by weight. If the gel fraction is less than 40% by weight, the cohesive strength may become low so that the adhesion strength is low, peeling is caused, and adhesive residues are generated. If the gel fraction exceeds 98% by weight, the adhesive strength tends to be too low, and therefore it is not preferable. With respect to a pressure-sensitive adhesive sheet for general use, if the gel fraction exceeds 85% by weight, the adhesive strength becomes too low so that the pressure-sensitive adhesive sheet itself may not be fixed to an adherend, and therefore it is not preferable.

In the case of a pressure-sensitive adhesive sheet to be used for surface protection or the like, it is preferable to blend the crosslinking agent such that the pressure-sensitive adhesive layer to be formed has a gel fraction of 40 to 98% by weight, more preferably 70 to 97% by weight, and particularly preferably 74 to 96% by weight. Particularly, with respect to a pressure-sensitive adhesive sheet for surface protection, if the gel fraction is less than 70% by weight, the adhesive strength (peel strength) may be increased over time or an adherend may be stained at the time of peeling the pressure-sensitive adhesive layer (pressure-sensitive adhesive sheet), and it may result in inferiority in light peelability and removability, and further it is not preferable in terms of handleability (workability). On the other hand, if the gel fraction exceeds 98% by weight, the adhesive strength may be too low so that the pressure-sensitive adhesive sheet itself may not be fixed to an adherend, and the pressure-sensitive adhesive sheet cannot be also used for surface protection, and therefore it is not preferable.

The blending amount of the crosslinking agent is preferably, for example, 0.001 to 20 parts by weight, and more preferably 0.001 to 15 parts by weight based on 100 parts by weight of the polyester. If the blending amount is less than 0.001 parts by weight, the cohesive strength cannot be increased in the case of forming a pressure-sensitive adhesive layer, and heat resistance may be lowered. If the blending amount exceeds 20 parts by weight, defects that the adhesive strength is increased over time after bonding and that an adherend is stained may be caused, and therefore it is not preferable.

In order to efficiently adjust the gel fraction in the pressure-sensitive adhesive layer to be used for the pressure-sensitive adhesive sheet of the present invention, a crosslinking catalyst may be properly used. Examples of the catalyst include tetra-n-butyl titanate, tetraisopropyl titanate, butyltin oxide, and dioctyltin dilaurate. These catalysts may be used alone or in combination of two or more of them.

The blending amount of the catalyst is not particularly limited, but is preferably 0.01 to 1 part by weight and more preferably 0.05 to 0.5 parts by weight based on 100 parts by weight of the polyester. If the blending amount is less than 0.01 parts by weight, the effect of catalyst addition may not be obtained, and if the blending amount exceeds 1 part by weight, the shelf life is considerably shortened and the stability for application may be lowered, and therefore it is not preferable.

In order to prolong the shelf life, acetyl acetone, methanol, methyl orthoacetate, and the like may be also blended properly as a retarder.

The blending of a polyether glycol with the polyester-based pressure-sensitive adhesive composition of the present invention together with the polyester and the crosslinking agent can provide a pressure-sensitive adhesive layer (pressure-sensitive adhesive sheet, surface protective sheet) with good wettability and suppression of air bubbles included therein.

Examples of the polyether glycol that can be used include polyoxyalkylene glycols such as polytetramethylene ether glycol and polytrimethylene ether glycol; copolyether polyols of 1 to 20% by mole 3-methyltetrahydrofuran and tetrahydrofuran copolymer (e.g., "PTG-L1000", "PTG-L2000", "PTG-L3000", etc., manufactured by Hodogaya Chemical Co., Ltd.); copolyether glycols of neopentyl glycol and tetrahydrofuran; polyethylene glycol, polypropylene glycol, and polyoxypropylene glycol. Polyether glycols derived from plants are preferable in terms of friendliness to global environments. These compounds may be used alone or in combination of two or more of them.

The polyether glycol has a number average molecular weight (Mn) of preferably 1000 to 3500, and more preferably 2000 to 3000. If the number average molecular weight is less than 1000, the effects of good wettability, suppression of air bubbles to be included, and the like cannot be obtained, and if the number average molecular weight is more than 3500, compatibility with the polyester is worsened, so that appearance defects are easily caused, and therefore it is not preferable. The reasons are not clear in detail, but it is supposed as follows: the use of a polyether glycol having a number average molecular weight within the above-mentioned range can shorten the distance between the crosslinking points of polymer chains, and thus the density of the polymer chains is increased. Accordingly, the elastic modulus of the pressure-sensitive adhesive layer is increased after crosslinking, and the rigidity of the pressure-sensitive adhesive sheet is increased, so that the sheet is hard to be deformed by self weight. This allows that at the time of attachment to an adherend, adhesion is not caused at many points and air bubbles to be included can be suppressed. Because of the same reasons, the adhesive strength can be lowered, and the pressure-sensitive adhesive sheet is advantageous as a sheet for surface protection.

The blending amount of the polyether glycol is preferably 30 to 300 parts by weight, more preferably 50 to 250 parts by weight, and furthermore preferably 80 to 200 parts by weight based on 100 parts by weight of the polyester. If the blending amount is less than 30 parts by weight, the effects of good wettability, suppression of air bubbles to be included, and the like cannot be obtained, and if the blending amount is more than 300 parts by weight, compatibility with the polyester is worsened, so that appearance defects are caused and bleed out or the like may be generated. This may result in leaving stains on an adherend, and therefore it is not preferable.

In order to form a pressure-sensitive adhesive layer to be used for the pressure-sensitive adhesive sheet of the present invention, a tackifier may be used in combination with the polyester together with the crosslinking agent, and therefore a pressure-sensitive adhesive layer with desired properties can be formed.

The tackifier is not particularly limited, and conventionally and publicly-known tackifiers can be used, and examples thereof include terpene-based tackifiers, phenolic tackifiers, rosin-based tackifiers, aliphatic petroleum resins, aromatic petroleum resins, copolymer-based petroleum resins, alicyclic petroleum resins, xylene resins, epoxy-based tackifiers, polyamide-based tackifiers, ketone-based tackifiers, and elastomer-based tackifiers. Particularly, in order to improve a biomass degree, rosin-based tackifiers and terpene-based tackifiers produced from plant-derived raw materials are preferably used. These resins may be used alone or in combination of two or more of them. The biomass degree means the ratio of plant-derived raw materials to be used which is calculated from the weight of the plant-derived raw materials to be used to the weight of all raw materials to be used constituting the polyester-based pressure-sensitive adhesive composition.

Examples of the terpene-based tackifiers include terpene resins, terpene-phenol resins, and aromatic modified terpene resins, and specific examples of the terpene-based tackifiers that can be used include an $\alpha$-pinene polymer, a $\beta$-pinene polymer, and a dipentene polymer, and terpene resins obtained by phenol modification, aromatic modification, hydrogenation modification, and hydrocarbon modification of the above polymers.

Specifically, it is possible to use, as the phenol-based tackifier, condensates of various phenols such as phenol, m-cresol, 3,5-xylenol, p-alkylphenol and resorcin, and formaldehyde can be used. It is also possible to use resol obtained by an addition reaction of the phenols and formaldehyde in the presence of an alkali catalyst, novolak obtained by a condensation reaction of the phenols and formaldehyde in the presence of an acid catalyst, and a rosin-modified phenol resin obtained by adding phenol to rosins such as an unmodified or modified rosin, or a derivatives thereof in the presence of an acid catalyst, followed by thermopolymerization.

Examples of the rosin-based tackifiers include rosin resins, polymerized rosin resins, hydrogenated rosin resins, rosin ester resins, hydrogenated rosin ester resins, and rosin phenol resins, and specific examples of the rosin-based tackifiers that can be used include unmodified rosins (raw rosins) such as gum rosin, wood rosin, and tall oil rosin; and modified rosins obtained by subjecting these unmodified rosins to hydrogenation, disproportionation, polymerization, and other chemical modification.

The blending amount of the tackifier is preferably 0 to 50 parts by weight, more preferably 2 to 30 parts by weight, and particularly preferably 5 to 20 parts by weight based on 100 parts by weight of the polyester. If the blending amount exceeds 50 parts by weight, the adhesive strength is increased and re-peeling may become difficult after exposure to high temperature environments, and therefore it is not preferable.

General additives such as an ultraviolet absorber, a photostabilizer, a peeling adjustment agent, a plasticizer, a softening agent, a filler, coloring agents such as a pigment and a dye, an aging prevention agent, and a surfactant may be used to an extent that the properties of the pressure-sensitive adhesive layer (pressure-sensitive adhesive) to be used for the pressure-sensitive adhesive sheet of the present invention are not adversely affected.

The thickness of the pressure-sensitive adhesive layer (after drying) may be properly selected, but the thickness is preferably, for example, about 1 to 100 $\mu$m, more preferably about 3 to 80 $\mu$m, and particularly preferably about 5 to 60 $\mu$m. If the thickness of the pressure-sensitive adhesive layer is thinner than 1 $\mu$m, it becomes difficult to obtain sufficient adhesive strength, and the pressure-sensitive adhesive sheet (pressure-sensitive adhesive layer) itself cannot be fixed to an adherend and may tend to be easily peeled. If the thickness exceeds 100 $\mu$m, the adhesive strength is increased over time so that the pressure-sensitive adhesive sheet is hard to be peeled, and therefore it is not preferable. The pressure-sensitive adhesive layer may be any of a mono layer layer form or a layered form.

The pressure-sensitive adhesive sheet of the present invention is obtained by comprising a support and the pressure-sensitive adhesive layer formed on at least one surface of the support. The pressure-sensitive adhesive sheet may have an interlayer or an undercoating layer without any problem to an extent that the properties of the pressure-sensitive adhesive sheet of the present invention are not adversely affected.

The support is not particularly limited and conventionally and publicly-known supports can be used, that is, various kinds of supports (substrates) such as a plastic film, porous materials including paper and non-woven fabrics may be used. In the case of use for surface protection, it is a preferable embodiment to use a plastic film in terms of durability and the like. Examples of the plastic film may include polyolefin films of polyethylene, polypropylene, poly-1-butene, poly-4-methyl-1-pentene, ethylene-propylene copolymer, ethylene-1-butene copolymer, ethylene-vinyl acetate copolymer, ethylene-ethyl acrylate copolymer, ethylene-vinyl alcohol copolymer, and the like; polyester films of polyethylene terephthalate, polyethylene naphthalate, polybutylene terephthalate, and the like; polyacrylate films; polystyrene films; polyamide films of nylon6, nylon6,6, partially aromatic polyamide, and the like; polyvinyl chloride films; polyvinylidene chloride films; and polycarbonate films. A support made of polylactic acid or cellulose produced from plant-derived raw materials can be preferably used.

In the support, if necessary, various additives used in a conventional substrate for a pressure-sensitive adhesive tape (support), such as ultraviolet absorbers, photostabilizers, antioxidants, fillers, pigments and dyes can be used.

If necessary, a surface of the support (substrate) may be subjected to common surface treatment in order to increase anchoring to the pressure-sensitive adhesive layer, and for example, oxidation treatment by chemical or physical method such as chromate treatment, exposure to ozone, exposure to flames, exposure to high voltage electric shock, or ionization radiation treatment may be carried out, or coating treatment with an undercoating agent or the like may be carried out. Further, in order to provide peeling properties, for example, coating treatment with a peeling agent of a silicone-based resin, a fluoro-based resin, or the like may be carried out between various kinds of pressure-sensitive adhesive layers to be formed on the support.

The thickness of the support (substrate) may be selected properly depending on its material or configuration, but the thickness is preferably, for example, 1000 μm or thinner, more preferably about 1 to 1000 μm, furthermore preferably about 2 to 500 μm, still more preferably about 3 to 300 μm, and particularly preferably about 5 to 250 μm.

As a method for forming the pressure-sensitive adhesive layer, a conventionally and publicly-known method may be employed, and the formation method can be carried out based on a publicly-known production method of a pressure-sensitive adhesive sheet such as a method for forming a pressure-sensitive adhesive layer by applying a pressure-sensitive adhesive composition (a pressure-sensitive adhesive composition solution obtained by dissolving the pressure-sensitive adhesive composition in a solvent or a thermally melted solution) to the support (substrate) and drying the composition; a method for forming a pressure-sensitive adhesive layer by applying the pressure-sensitive adhesive composition to the support, drying the composition to form a pressure-sensitive adhesive composition layer, and further carrying out crosslinking treatment to form a pressure-sensitive adhesive layer; a method for transferring a pressure-sensitive adhesive layer formed on a release liner by application to a support; a method for extruding a material for forming a pressure-sensitive adhesive layer to a support (substrate), followed by application; a method for extruding a pressure-sensitive adhesive layer in a bi- or multi-layer form on a support (substrate); a method for mono layer lamination of a pressure-sensitive adhesive layer on a support (substrate) . Further, a method for bi- or multi-layer co-extrusion of a pressure-sensitive adhesive layer together with a support (substrate) made of a thermoplastic resin by an inflation method or a T-die method may be used. The pressure-sensitive adhesive sheet in the present invention includes a pressure-sensitive adhesive film, a pressure-sensitive adhesive tape, and the like.

As a method for applying the pressure-sensitive adhesive composition (solution), a conventionally and publicly-known method may be employed, and examples of the method include roll coating, gravure coating, reverse roll coating, roll brush coating, air knife coating, spray coating, and extrusion coating with a die coater or the like.

The release liner is not particularly limited and conventionally known release liner s can be appropriately used. For example, it is possible to use a release liner in which a peeling coat layer is formed on at least one surface of a substrate (substrate for a release liner). The substrate for a release liner can use any form of a mono layer and plural layers.

It is possible to use, as the substrate for a release liner, various thin leaf-shaped materials such as a plastic film, a paper, a foam and a metal foil, and a plastic film is particularly preferred. Examples of the raw material of the plastic film include polyesters such as polyethylene terephthalate; polyolefins such as polypropylene and an ethylene-propylene copolymer; and thermoplastic resins such as polyvinyl chloride.

The thickness of the substrate for a release liner can be appropriately selected according to the purposes.

The formation of the pressure-sensitive adhesive layer is not particularly limited, but the temperature for drying after application of the pressure-sensitive adhesive composition (solution) may be normally 60 to 150°C and preferably 70 to 140°C.

Examples

The present invention will be described in more detail by way of Examples of the present invention, but the present invention is not limited to these Examples. Parts in Examples are by weight. The physical properties of polyesters are shown in Table 1, and the blending contents and evaluation results of the pressure-sensitive adhesive layers (pressure-sensitive adhesive sheets) are shown in Table 2. The physical properties of polyether glycols used in Examples are shown in Table 3.

<Preparation of polyester A>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 24 parts of 1,4-butanediol (manufactured by Wako Pure Chemical Industries, Ltd. , molecular weight: 90) as a diol so that the mole ratio of the dimer acid and the 1,4-butanediol was 1 : 1.56, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.

Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 10 hours to obtain a polyester A. The polyester A had a weight average molecular weight (Mw) of 10000.

<Preparation of polyester B>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 21 parts of 1,4-butanediol (manufactured by Wako Pure Chemical Industries, Ltd. , molecular weight: 90) as a diol so that the mole ratio of the dimer acid and the 1,4-butanediol was 1 : 1.3, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.
Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 7 hours to obtain a polyester B. The polyester B had a weight average molecular weight (Mw) of 30000.

<Preparation of polyester C>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 18.3 parts of 1,4-butanediol (manufactured by Wako Pure Chemical Industries, Ltd. , molecular weight: 90) as a diol so that the mole ratio of the dimer acid and the 1,4-butanediol was 1 : 1.3, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.
Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 4 hours to obtain a polyester C. The polyester C had a weight average molecular weight (Mw) of 50000.

<Preparation of polyester D>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 27 parts of 1,4-butanediol (manufactured by Wako Pure Chemical Industries, Ltd. , molecular weight: 90) as a diol so that the mole ratio of the dimer acid and the 1,4-butanediol was 1 : 1.7, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.
Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 6 hours to obtain a polyester D. The polyester D had a weight average molecular weight (Mw) of 4000.

<Preparation of polyester E>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 17.5 parts of 1,4-butanediol (manufactured by Wako Pure Chemical Industries, Ltd. , molecular weight: 90) as a diol so that the mole ratio of the dimer acid and the 1, 4-butanediol was 1 : 1.1, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.
Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 4 hours to obtain a polyester E. The polyester E had a weight average molecular weight (Mw) of 70000.

<Preparation of polyester F>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 34 parts of 1,10-decanediol (manufactured by Wako Pure Chemical Industries, Ltd. ; molecular weight: 174.3) as a diol so that the mole ratio of the dimer acid and the 1,10-decanediol was 1 : 1.1, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.

Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 4 hours to obtain a polyester F. The polyester F had a weight average molecular weight (Mw) of 20000.

<Preparation of polyester G>

A three-neck separable flask equipped with a stirrer, a thermometer, a nitrogen gas introduction tube, and a condenser having a trap was charged with 100 parts of a dimer acid (trade name: "Pripol 1009", manufactured by Croda, molecular weight: 567) as a dicarboxylic acid and 17.2 parts of ethylene glycol (manufactured by Wako Pure Chemical Industries, Ltd. ; molecular weight: 62.1) as a diol so that the mole ratio of the dimer acid and the ethylene glycol was 1 : 1.5, and 0.2 parts of dibutyltin oxide (manufactured by Wako Pure Chemical Industries, Ltd.) as a catalyst, and the contents were heated to 180°C and kept at this temperature for 8 hours while being stirred in a nitrogen atmosphere.

Thereafter, the nitrogen introduction tube and the condenser were taken out and a vacuum pump was attached instead, and the contents were heated to 200°C and kept at this temperature while being stirred in a reduced pressure atmosphere (0.002 MPa). The reaction was continued for about 5 hours to obtain a polyester G. The polyester G had a weight average molecular weight (Mw) of 20000.

<Comparative Example 1>

Fifteen parts of polyhexamethylene diisocyanate (trade name: "TPA-100", manufactured by Asahi Kasei Chemicals Corporation) as a crosslinking agent and 50 to 150 parts of toluene as a solvent were blended with 100 parts of the polyester A to adjust viscosity (e.g., about 10 Pa•s) for easy application and processing, so that a polyester-based pressure-sensitive adhesive composition was obtained. This composition was applied to a polyethylene terephthalate (PET) film (trade name: "Lumirror 38 S10", manufactured by PANAC Corporation) as the substrate with 38 $\mu$m thickness in such a manner that the pressure-sensitive adhesive layer obtained by drying (after drying) had a thickness of 10 $\mu$m, and dried at 100°C for 3 minutes to obtain a pressure-sensitive adhesive layer. Thereafter, the pressure-sensitive adhesive layer was bonded to the peeling-treated surface of a polyethylene terephthalate (PET) film (thickness: 38 $\mu$m, trade name: "Diafoil MRE#38", manufactured by Mitsubishi Plastics Inc.) subjected to peeling treatment, and the resultant was left at 50°C for 3 days to obtain a pressure-sensitive adhesive sheet (for surface protection) having a support and a pressure-sensitive adhesive layer formed on the support.

< Comparative Example 2>

A pressure-sensitive adhesive sheet (for surface protection) was obtained in the same manner as in Comparative Example 1, except that 10 parts of the crosslinking agent was blended with 100 parts of the polyester B.

< Comparative Example 3>

A pressure-sensitive adhesive sheet (for surface protection) was obtained in the same manner as in Comparative Example 1, except that 8 parts of the crosslinking agent was blended with 100 parts of the polyester C.

< Comparative Example 4>

A pressure-sensitive adhesive sheet (for surface protection) was obtained in the same manner as in Comparative Example 1, except that 10 parts of the crosslinking agent was blended with 100 parts of the polyester F.

< Comparative Example 5>

A pressure-sensitive adhesive sheet (for general use) was obtained in the same manner as in Comparative Example 1, except that 6 parts of the crosslinking agent was blended with 100 parts of the polyester A and the pressure-sensitive adhesive layer to be obtained (after drying) was adjusted to have a thickness of 30 $\mu$m.

< Comparative Example 6>

A pressure-sensitive adhesive sheet (for general use) was obtained in the same manner as in Comparative Example 5, except that 2 parts of the crosslinking agent was blended with 100 parts of the polyester B.

< Comparative Example 7>

Apressure-sensitive adhesive sheet (for general use) was obtained in the same manner as in Comparative Example 5, except that 2 parts of the crosslinking agent was blended with 100 parts of the polyester C.

< Comparative Example 8>

Apressure-sensitive adhesive sheet (for general use) was obtained in the same manner as in Comparative Example 5, except that 1 parts of the crosslinking agent was blended with 100 parts of the polyester F.

<Example 9>

A pressure-sensitive adhesive sheet (for surface protection) was obtained in the same manner as in Example 1, except that 50 parts of the crosslinking agent and 30 parts of polytetramethylene ether glycol having a number average molecular weight (Mn) of 1000 (trade name: "PTG-1000SN", manufactured by Hodogaya Chemical Co. , Ltd.) were blended with 100 parts of the polyester A.

<Example 10>

A pressure-sensitive adhesive sheet (for surface protection) was obtained in the same manner as in Example 1, except that 100 parts of the crosslinking agent and 300 parts of polytetramethylene ether glycol having a number average molecular weight (Mn) of 1000 (trade name: "PTG-1000SN", manufactured by Hodogaya Chemical Co., Ltd.) were blended with 100 parts of the polyester A.

<Example 11>

A pressure-sensitive adhesive sheet (for surface protection) was obtained in the same manner as in Example 1, except that 30 parts of the crosslinking agent and 30 parts of polytetramethylene ether glycol having a number average molecular weight (Mn) of 3000 (trade name: "PTG-1000SN", manufactured by Hodogaya Chemical Co., Ltd.) were blended with 100 parts of the polyester A.

<Example 12>

A pressure-sensitive adhesive sheet (for surface protection) was obtained in the same manner as in Example 1, except that 60 parts of the crosslinking agent and 300 parts of polytetramethylene ether glycol having a number average molecular weight (Mn) of 3000 (trade name: "PTG-1000SN", manufactured by Hodogaya Chemical Co., Ltd.) were blended with 100 parts of the polyester A.

<Example 13>

A pressure-sensitive adhesive sheet (for surface protection) was obtained in the same manner as in Example 1, except that 60 parts of the crosslinking agent and 150 parts of polytetramethylene ether glycol having a number average molecular weight (Mn) of 2000 (trade name: "PTG-2000SN", manufactured by Hodogaya Chemical Co., Ltd.) were blended with 100 parts of the polyester A.

<Example 14>

A pressure-sensitive adhesive sheet (for surface protection) was obtained in the same manner as in Example 1, except that 70 parts of the crosslinking agent and 150 parts of polytrimethylene ether glycol having a number average molecular weight (Mn) of 1000 (trade name: "Cerenol H1000", manufactured by DuPont) were blended with 100 parts of the polyester A.

<Example 15>

A pressure-sensitive adhesive sheet (for surface protection) was obtained in the same manner as in Example 1, except that 40 parts of the crosslinking agent and 150 parts of polyoxypropylene glycol having a number average molecular weight (Mn) of 3200 (trade name: "Sannix PP-3000", manufactured by Sanyo Chemical Industries, Ltd.) were blended with 100 parts of the polyester A.

<Example 16>

A pressure-sensitive adhesive sheet (for surface protection) was obtained in the same manner as in Example 1, except that 70 parts of the crosslinking agent and 150 parts of copolyether polyol having a number average molecular weight (Mn) of 1000 (trade name: "PTG-L1000", manufactured by Hodogaya Chemical Co., Ltd.) were blended with 100 parts of the polyester A.

<Example 17>

A pressure-sensitive adhesive sheet (for surface protection) was obtained in the same manner as in Example 1, except that 60 parts of the crosslinking agent and 150 parts of copolyether polyol having a number average molecular weight (Mn) of 2000 (trade name: "PTG-L2000", manufactured by Hodogaya Chemical Co., Ltd.) were blended with 100 parts of the polyester A.

<Example 18>

A pressure-sensitive adhesive sheet (for surface protection) was obtained in the same manner as in Example 1, except that 40 parts of the crosslinking agent and 150 parts of copolyether polyol having a number average molecular weight (Mn) of 3000 (trade name: "PTG-L3000" , manufactured by Hodogaya Chemical Co., Ltd.) were blended with 100 parts of the polyester A.

<Comparative Example 9>

A pressure-sensitive adhesive sheet (corresponding for surface protection) was obtained in the same manner as in Comparative Example 1, except that 20 parts of the crosslinking agent was blended with 100 parts of the polyester D.

<Comparative Example 10>

A pressure-sensitive adhesive sheet (corresponding for surface protection) was obtained in the same manner as in Comparative Example 1, except that 8 parts of the crosslinking agent was blended with 100 parts of the polyester E.

<Comparative Example 11>

A pressure-sensitive adhesive sheet (corresponding for surface protection) was obtained in the same manner as in Comparative Example 1, except that 10 parts of the crosslinking agent was blended with 100 parts of the polyester G.

<Comparative Example 12>

A pressure-sensitive adhesive sheet (corresponding for surface protection) was obtained in the same manner as in Comparative Example 1, except that 20 parts of the crosslinking agent and 150 parts of polytetramethylene ether glycol having a number average molecular weight (Mn) of 3000 (trade name: "PTG-3000SN" , manufactured by Hodogaya Chemical Co., Ltd.) were blended with 100 parts of the polyester E.

(Weight average molecular weight)

The weight average molecular weight (Mw) was measured as follows: about 0.2 g of each polyester was collected on a petri dish, and the solvent was removed by drying at 120°C for 2 hours. Then, 0.01 g of the polyester layer on the petri dish was weighed, which was added to 10 g of tetrahydrofuran (THF) and left for 24 hours for dissolution. The obtained solution was subjected to gel permeation chromatography (GPC), and the molecular weight of each polyester was measured based on the calibration curve produced using standard polystyrene. (Measurement conditions) Apparatus name: HLC-8220GPC, manufactured by Tosoh Corporation

Test piece concentration: 0.1% by weight (THF solution)
Test piece injection amount: 20 μl
Eluent: THF
Flow rate: 0.300 ml/min
Measurement (column) temperature: 40°C
Column: Test piece column; TSKguardcolumn SuperHZ-L (1 column)+TSKgel SuperHZM-M (2 columns), reference column; TSKgel SuperH-RC (1 column), manufactured by Tosoh Corporation
Detector: Differential refractometer (RI)

(Gel fraction of pressure-sensitive adhesive layer)

Each of the pressure-sensitive adhesive sheets having a thickness of 30 μm obtained in Examples and Comparative Examples was cut in a size of 5 cm × 5 cm. The support was removed from the cut pressure-sensitive adhesive sheet to obtain a test piece, and this test piece was wrapped with a Teflon (registered trade name) sheet with a known weight, and the obtained test piece was weighed and then left at 23°C for 7 days in toluene to extract the sol component from the test piece. Thereafter, the resulting test piece was dried at 120°C for 2 hours and then weighed. The gel fraction was calculated according to the following equation.

$$\text{Gel fraction (\% by weight)} = (\text{weight after drying} - \text{weight}$$
$$\text{of Teflon (registered trade name) sheet)}/(\text{weight before drying}$$
$$- \text{weight of Teflon (registered trade name) sheet)} \times 100$$

(Adhesive strength)

Each of the pressure-sensitive adhesive sheets having a pressure-sensitive adhesive layer thickness of 10 μm obtained in Examples and Comparative Examples was cut in 25 mm width, and the pressure-sensitive adhesive surface of the pressure-sensitive adhesive sheet was bonded to a tin-untreated surface of alkali glass (manufactured by Matsunami Glass Ind. , Ltd.) and a pressure-sensitive adhesive sheet having a pressure-sensitive adhesive layer thickness of 30 um was bonded to a SUS 304 plate (manufactured by Toyo Seihaku Co., Ltd.) to obtain each test piece, and the adhesive strength to a blue plate glass (adhesive strength to glass) (N/25 mm) and the adhesive strength to the SUS 304 plate (adhesive strength to SUS) (N/25 mm) were measured. The pressure bonding at the time of bonding was carried out by reciprocating a 2 kg roller one time, and the measurement of adhering strength (adhesive strength) at 180° peeling was carried out using a tensile compression tester (apparatus name: "TG-1 kN", manufactured by Minebea Co., Ltd.) in the following conditions.
Tension (peeling) rate: 300 mm/min
Measurement conditions: temperature: 23 ± 2°C, humidity 65 ± 5% RH
The adhesive strength (peel strength) to glass is preferably 1 N/25 mm or less, more preferably 0.8 N/25 mm or less, and furthermore preferably 0.5 N/25 mm or less. If the adhesive strength exceeds 1 N/25 mm, the adhesive strength is too high so that light peelability and removability cannot be attained, and for example, in the case of using the test piece as a pressure-sensitive adhesive sheet for surface protection, adhesive residues may remain on an adherend at the time of peeling thereafter, and the support (substrate) may be damaged, and therefore it is not preferable.
The adhesive strength (peel strength) to SUS is preferably 3 to 25 N/25 mm, more preferably 5 to 20 N/25 mm, and furthermore preferably 8 to 15N/15 mm. If the adhesive strength is less than 3 N/25 mm, fixing or holding properties cannot be attained, and it is not preferable to use the test piece as a pressure-sensitive adhesive sheet for general use. If the adhesive strength exceeds 25 N/25 mm, peeling becomes difficult and the test piece is not preferable for the use other than permanent adhesion.

(Anti-staining property)

Presence or absence of staining on an adherend was evaluated in accordance with presence or absence of traces of bleeding out or presence or absence of adhesive residues by visual observing, the surface of the adherend which had contact with pressure-sensitive adhesive layer after the measurement of the adhesive strength.

(Wettability)

Each of the pressure-sensitive adhesive sheets obtained in Examples and Comparative Examples was cut in 25 mm width and 70 mm length, and the pressure-sensitive adhesive surface was dropped calmly onto a glass plate, and the motion-pictures of widening of the surface area of the pressure-sensitive adhesive surface per one second were taken by a video camera. The color shades owing to wetting were then binarized for every 0.5 seconds so that the wet surface area was measured, and the wetting rate ($cm^2/s$) was calculated for evaluation. Presence or absence of air bubble inclusion was also observed together with the evaluation of wettability.

The wetting rate of the pressure-sensitive adhesive sheet of the present invention is preferably 0.6 $cm^2/s$ or more, more preferably 1.0 $cm^2/s$ or more, and particularly preferably 3.0 $cm^2/s$ . If the wetting rate is less than 0.6 $cm^2/s$, handleability may be inferior and air bubbles may be easily included, and the appearance of the adherend to which a surface protective sheet is bonded is worsened, and therefore it is not preferable.

[Table 1]

| Polyester | Dicarboxylic acid component | Diol component (carbon number) | Molecular weight (Mw) |
|---|---|---|---|
| A | Dimer acid | 1,4-butanediol (4) | 10,000 |
| B | Dimer acid | 1,4-butanediol (4) | 30,000 |
| C | Dimer acid | 1,4-butanediol (4) | 50,000 |
| D | Dimer acid | 1,4-butanediol (4) | 4,000 |
| E | Dimer acid | 1,4-butanediol (4) | 70,000 |
| F | Dimer acid | 1,10-decanediol (10) | 20,000 |
| G | Dimer acid | Ethylene glycol (2) | 20,000 |

[Table 2]

| Blending and evaluation results | Unit | Comparative Example | | | | | | | | Example | | | | | | | | | | Comparative Example | | | |
|---|---|---|---|---|---|---|---|---|---|---|---|---|---|---|---|---|---|---|---|---|---|---|---|
| | | 1. | 2 | 3 | 4 | 5 | 6 | 7 | 8 | 9 | 10 | 11 | 12 | 13 | 14 | 15 | 16 | 17 | 18 | 9 | 10 | 11 | 12 |
| Polyester | - | A | B | C | F | A | B | C | F | A | A | A | A | A | A | A | A | A | A | D | E | G | E |
| | Parts by weight | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Polyether glycol | - | - | - | - | - | - | - | - | - | H | H | J | J | I | K | L | M | N | O | - | - | - | J |
| | Parts by weight | - | - | - | - | - | - | - | - | 30 | 300 | 30 | 300 | 150 | 150 | 150 | 150 | 150 | 150 | - | - | - | 150 |
| Crosslinking agent | Parts by weight | 15 | 10 | 8 | 10 | 6 | 2 | 1 | 3 | 50 | 100 | 30 | 60 | 60 | 70 | 40 | 70 | 60 | 40 | 20 | 8 | 10 | 20 |
| Gel fraction | % by weight | 96 | 88 | 80 | 90 | 42 | 48 | 57 | 50 | 95 | 98 | 97 | 98 | 96 | 98 | 97 | 97 | 98 | 98 | No gelation | 70 | 90 | 80 |
| Adhesive strength to glass | N/25 mm | 0.1 | 0.2 | 0.5 | 0.1 | - | - | - | - | 0.1 | 0.1 | 0.1 | 0.1 | 0.1 | 0.1 | 0.1 | 0.1 | 0.1 | 0.1 | Non-measurable | 3.0 | 0.1 | 1.5 |
| Wetting rate | cm²/sec | 7.5 | 7.8 | 6.3 | 7.6 | - | - | - | - | 7.6 | 8.2 | 8.1 | 8.5 | 7.9 | 7.8 | 7.6 | 8.0 | 8.2 | 8.3 | Non-measurable | 2.5 | 2.0 | 2.5 |
| Air bubble inclusion | Presence or absence | Presence | Presence | Presence | Presence | - | - | - | - | Absence | Absence | Absence | Absence | Absence | Absence | Absence | Absence | Absence | Absence | Non-observable | Presence | Presence | Presence |
| Adhesive strength to SUS | N/25 mm | - | - | - | - | 7.5 | 12.0 | 12.0 | 14.0 | - | - | - | - | - | - | - | - | - | - | Non-measurable | - | - | - |
| Presence or absence of staining | - | Absence | Absence | Absence | Absence | Absence | Absence | Absence | Absence | Absence | Absence | Absence | Absence | Absence | Absence | Absence | Absence | Absence | Absence | Presence | Absence | Absence | Absence |

EP 2 826 834 B1

15

Remark) (-) in Table 2 shows no execution of evaluation. The results were of evaluation for the pressure-sensitive adhesive sheets for surface protection in Comparative Examples 1 to 4 and Examples 9 to 18, and of evaluation for the pressure-sensitive adhesive sheets for general use in Comparative Examples 5 to 8.

[Table 3]

| Polyether glycol | Kind | Number average molecular weight (Mn) |
|---|---|---|
| H | Polytetramethylene ether glycol | 1,000 |
| I | Polytetramethylene ether glycol | 2,000 |
| J | Polytetramethylene ether glycol | 3,000 |
| K | Polytrimethylene ether glycol | 1,000 |
| L | Polyoxypropylene glycol | 3,200 |
| M | Copolyether polyol | 1,000 |
| N | Copolyether polyol | 2,000 |
| O | Copolyether polyol | 3,000 |

From the results of evaluation in Table 2, regarding Comparative Examples 1 to 8, since polyesters each with a desired weight average molecular weight were used, pressure-sensitive adhesive layers (pressure-sensitive adhesive sheets) were obtained which had desired gel fraction and adhesive strength (peel strength), had good wettability at the time of bonding to an adherend and excellent workability, had no adhesive residues even after being peeled off, and had excellent light peelability, removability, and anti-staining properties. It was confirmed that in the pressure-sensitive adhesive layers (pressure-sensitive adhesive sheets), a wide range of pressure-sensitive adhesion design is possible. Particularly, it was confirmed that, in Comparative Examples 1 to 4, pressure-sensitive adhesive sheets suitable for surface protection were obtained, and in Comparative Examples 5 to 8, pressure-sensitive adhesive sheets with higher adhesive strength as compared with that for surface protection were obtained. It was confirmed that, in Examples 9 to 18, pressure-sensitive adhesive sheets (surface protective sheets) with less air bubble inclusion at the time of bonding were obtained by blending polyether glycol.

On the other hand, in Comparative Example 9, since the weight average molecular weight of the polyester was small and was out of the desired range, gelation was insufficient and production of a pressure-sensitive adhesive layer (pressure-sensitive adhesive sheet) was difficult. In Comparative Example 10, the weight average molecular weight of the polyester was large, and the adhesive strength was problematic, and air bubble inclusion was also observed. In Comparative Example 11, the polyester production (polymerization) was carried out using an aliphatic diol with a carbon number less than the desired range, but at the time of polymerization, it was confirmed that the diol itself was evaporated, and handleability (workability) was inferior, and air bubbles were included in the obtained pressure-sensitive adhesive layer (pressure-sensitive adhesive sheet). In Comparative Example 12, the weight average molecular weight of the polyester was large, and the adhesive strength was problematic, and air bubble inclusion was also observed although polyether glycol was blended.

## Claims

1.  A polyester-based pressure-sensitive adhesive composition comprising a polyester obtained by condensation polymerization of at least a dicarboxylic acid having a side chain and an aliphatic diol having 3 to 10 carbon atoms, a polyether glycol and a crosslinking agent, wherein
    mole ratio of the dicarboxylic acid and the diol is 1 : (1.08 to 2.10), and
    the polyester has a weight average molecular weight of 5000 to 60000 measured as indicated in the description.

2.  A pressure-sensitive adhesive sheet comprising a support and a pressure-sensitive adhesive layer obtained by crosslinking the polyester-based pressure-sensitive adhesive composition according to claim 1 and formed on at least one surface of the support, wherein
    the pressure-sensitive adhesive layer has a gel fraction of 40 to 98% by weight when cut in a size of 5 cm $\times$ 5 cm having a thickness of 30 $\mu$m, wrapped with a Teflon sheet, weighed and then left at 23°C for 7 days in toluene dried at 120°C for 2 hours and then weighed again, the gel fraction being calculated according to the following equation:

Gel fraction (% by weight) = (weight after drying - weight of Teflon sheet)/(weight before drying - weight of Teflon sheet) × 100.

3. The pressure-sensitive adhesive sheet according to claim 2, which is used for surface protection.

**Patentansprüche**

1. Auf Polyester basierende druckempfindliche Klebezusammensetzung, umfassend ein Polyester, der durch Kondensationspolymerisation von mindestens einer Dicarbonsäure mit einer Seitenkette und einem aliphatischen Diol mit 3 bis 10 Kohlenstoffatomen, einem Polyetherglykol und einem Vernetzungsmittel erhalten wird, worin das Molverhältnis der Dicarbonsäure und des Diols 1 : (1,08 bis 2,10) beträgt, und der Polyester ein gewichtsmittleres Molekulargewicht von 5000 bis 60.000 aufweist, das wie in der Beschreibung aufgeführt gemessen wird.

2. Druckempfindliche Klebefolie, umfassend einen Träger und eine druckempfindliche Klebeschicht, die durch Vernetzen der auf Polyester basierenden druckempfindlichen Klebezusammensetzung gemäß Anspruch 1 erhalten wird und auf mindestens einer Oberfläche des Trägers gebildet wird, worin die druckempfindliche Klebeschicht einen Gelanteil von 40 bis 98 Gewichtsprozent aufweist, wenn sie in eine Größe von 5 cm x 5 cm mit einer Dicke von 30 $\mu$m geschnitten, mit einer Teflonfolie umwickelt, gewogen und anschließend für sieben Tage bei 23° C in Toluol belassen wird, bei 120° für 2 Stunden getrocknet und anschließend erneut gewogen wird, wobei der Gelanteil gemäß der folgenden Gleichung berechnet wird:

Gelanteil (Gewichtsprozent) = (Gewicht nach dem Trocknen - Gewicht der Teflonfolie)/(Gewicht vor dem Trocknen - Gewicht der Teflonfolie) x 100.

3. Die druckempfindliche Klebefolie gemäß Anspruch 2, welche zum Oberflächenschutz verwendet wird.

**Revendications**

1. Composition adhésive sensible à la pression à base de polyester comprenant un polyester obtenu par polymérisation par condensation d'au moins un acide dicarboxylique ayant une chaîne latérale et d'un diol aliphatique ayant 3 à 10 atomes de carbone, un polyéthèrglycol et un agent de réticulation, dans laquelle le rapport en moles de l'acide dicarboxylique au diol est de 1/(1,08 à 2,10), et le polyester a une masse moléculaire moyenne en masse de 5 000 à 60 000, mesurée comme indiqué dans la description.

2. Feuille adhésive sensible à la pression comprenant un support et une couche adhésive sensible à la pression obtenue par réticulation de la composition adhésive sensible à la pression à base de polyester selon la revendication 1 et formée sur au moins une surface du support, dans laquelle la couche adhésive sensible à la pression a une fraction de gel de 40 à 98 % en poids lorsqu'elle est découpée à une taille de 5 cm x 5 cm avec une épaisseur de 30 $\mu$m, enveloppée avec une feuille de Téflon, pesée puis laissée à 23 °C pendant 7 jours dans du toluène, séchée à 120 °C pendant 2 heures, et ensuite pesée de nouveau, la fraction de gel étant calculée conformément à l'équation suivante :

Fraction de gel (% en poids) = (poids après séchage – poids de la feuille de Téflon) / (poids avant séchage – poids de la feuille de Téflon) x 100.

3. Feuille adhésive sensible à la pression selon la revendication 2, qui est utilisée pour la protection d'une surface.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008013593 A
- JP 2007327012 A
- JP 2010248489 A
- EP 2311896 A
- EP H04328186 A
- EP H03167284 A